# EUROPEAN PATENT APPLICATION

(11) **EP 2 447 457 A1**
(43) Date of publication of application: **02.05.2012**
(21) Application number: 11182646.7
(22) Date of filing: 23.09.2011
(51) Int. Cl.: E05G 1/08, G06Q 10/00, G07C 9/00

(54) **Lockable compartment access management**

(30) Priority: 28.10.2010 US 913969
(71) Applicant: NCR Corporation, Duluth, Georgia 30096 (US)
(72) Inventor: Mercado, Brennan, 9000 Cagayan de Oro City (PH)
(74) Representative: MacLeod, Roderick William

(57) **Abstract**

Apparatus, systems, and methods may operate to receive reservation requests for travel reservations associated with a common carrier. Responsive to receiving a request, an access control code to control access to a lockable compartment (228) within a vehicle (224) designated to provide transportation associated with the travel reservation may be generated. The compartment (228) may be a luggage compartment, such as an overhead bin on an airplane. The code may be transmitted to a mobile device carried by the passenger associated with the reservation, and used to provide lockable access to the compartment (228). Additional apparatus, systems, and methods are disclosed.

## Description

The number of miles traveled on vehicles provided by common carriers (planes, trains, and bus companies) continues to increase, enhancing the mobility of individual members of society. Currently, passengers traveling in close proximity to others act to enhance the security of their carry-on baggage items using strategic placement, such as stowing luggage so that handles face away from other passengers, and the like. While physical locks may be used to prevent unauthorized access to the interior of individual items, these locks do not prevent the entire piece of luggage from being stolen.

According to a first aspect of the invention there is provided a method comprising: receiving a reservation request for a travel reservation associated with at least one common carrier; and responsive to the receiving, generating an access control code to control access to a lockable compartment within a vehicle designated to provide transportation associated with the travel reservation.

The method may further comprise: requesting monetary or reward program credit payment in return for providing an opportunity to receive the access control code.

The method may further comprise: receiving, from a mobile device, the access control code or a code corresponding to the access control code to control access to the compartment, wherein the mobile device comprises one of a cellular telephone, a personal digital assistant, or a personal computer; and locking or opening the compartment in response to the receiving.

Generating may further comprise: generating the access control code by a code generation module communicatively coupled to one of the compartment or a kiosk associated with the common carrier.

The method may further comprise: receiving an invalid code to control access to the compartment, wherein the invalid code is not the access control code or a code corresponding to the access control code; and at least one of prohibiting access to the compartment or initiating an alarm signal.

The method may further comprise: authenticating a mobile device associated with the travel reservation to verify that the mobile device is permitted to receive the access control code.

The method may further comprise: transmitting the access control code to a mobile device.

The method may further comprise: sensing that the lockable compartment as a first compartment has contents; and providing access to a second lockable compartment in addition to, or as an alternative to the first compartment.

The method may further comprise: providing shared access to the compartment, to permit multiple mobile devices to access the compartment using the access control code, or a code corresponding to the access control code.

According to a second aspect of the present invention there is provided an apparatus comprising: a vehicle having a plurality of lockable compartments, the lockable compartments each having a lock to control access to the compartment; a wireless receiver; and a memory to store an access control code to control operation of the lock on a selected one of the compartments when the access control code or a code corresponding to the access control code is received by the wireless receiver, the access control code and/or the code corresponding to the access control code associated with a travel reservation on a common carrier.

The apparatus may further comprise: a communications module to receive the access control code from a server operated by the common carrier.

The wireless receiver comprises one of a radio receiver, a light receiver, or a sonic receiver.

The apparatus may further comprise: a decryption module to decrypt the access control code or the code corresponding to the access control code after the access control code or the code corresponding to the access control code is received.

The access control code may comprise a public and private key pair, and a code corresponding to the access control code may comprise encrypted information.

The apparatus may further comprise: a code generation module to generate the access control code, or the code corresponding to the access control code.

The apparatus of claim may further comprise: at least one of an audible or visible alarm to be activated upon receiving an invalid code that is not the access control code or the code corresponding to the access control code.

According to a third aspect of the invention there is provided a system comprising: a server to receive a reservation request for a travel reservation associated with at least one common carrier; and a code generation module to generate an access control code associated with the reservation request, the access control code to enable access to a selected lockable compartment included in a vehicle when a mobile communications device transmits the access control code or a code corresponding to the access control code to a receiver associated with the compartment.

The system may further comprise: a client terminal to receive an end-user request, and to transmit at least a portion of the end-user request as part of the reservation request to the server.

The system may further comprise: a transmission module to transmit the access control code to the mobile communications device.

The system may further comprise: an encryption module to encrypt the access control code.

In various embodiments, access to compartments, such as baggage compartments provided by common carriers, is managed. In some embodiments, activities include receiving a reservation request for a travel reservation associated with at least one common carrier; and responsive to the receiving, generating an access control code to control access to a lockable compartment within a vehicle designated to provide transportation associated with the travel reservation.

In some embodiments, an apparatus comprises a vehicle having a plurality of lockable compartments, the lockable compartments each having a lock to control access to the compartment; and a wireless receiver. The apparatus may further comprise a memory to store an access control code to control operation of the lock on a selected one of the compartments when the access control code (or a code corresponding to the access control code) is received by the wireless receiver, the code being associated with a travel reservation on a common carrier.

In some embodiments, a system comprises a server to receive a reservation request for a travel reservation associated with at least one common carrier; and a code generation module to generate an access control code associated with the reservation request. The access control code may be used to enable access to a selected lockable compartment included in a vehicle when a mobile communications device transmits the access control code (or a code corresponding to the access control code) to a receiver associated with the compartment.

These and other aspects of the present invention will now be described, by way of example, with reference to the accompanying drawings, in which:

FIG. 1 is a flow diagram of methods that can be used to manage access to lockable compartments, according to various embodiments of the invention;

FIG 2. is a block diagram of an apparatus that can be used to manage access to lockable compartments, according to various embodiments of the invention;

FIG. 3 is a block diagram of a system that can be used to manage access to lockable compartments, according to various embodiments of the invention; and

FIG. 4 is a block diagram of an article of manufacture, including a specific machine, according to various embodiments of the invention.

In various embodiments, a remote keyless entry (RKE) system operates to provide coded access to lockable compartments in vehicles provided by common carriers. For example, these compartments might include the overhead luggage bins in an airplane.

In some embodiments, an RKE mechanism is installed in the vehicle, in communication with several overhead compartments, or even within individual compartments themselves. A counterpart system is installed in a mobile device carried by a passenger, such as a mobile phone. When access to the compartment is desired, the passenger can simply operate his mobile device to transmit a code to the receiver associated with the compartment. If the code is valid, access to the compartment is confirmed, and the compartment will then be locked, or unlocked, as needed.

This solution can be offered as an additional feature, as part of the mobile boarding portal for a given airline, for example. That is, in addition to the electronic boarding pass with a barcode that forms part of the transaction associated with a particular reservation, the RKE mechanism in the passenger's mobile device can be activated. The portal might allow the passenger to reserve specific seats, so that one or more compartments directly above the seats (or nearby, as an alternative) will be controlled by the access code delivered to the mobile device.

The codes used to access the compartments should be unique to the mobile device and the compartment that is controlled by it. Thus, the codes may be encrypted.

The apparatus, systems, and methods disclosed herein can therefore be used to expand reservation and boarding services for common carriers. This capability may be offered for an additional fee, as a way to provide greater convenience and security to passengers.

For example, as a regular part of their travel, some passengers choose to place their baggage underneath their seats, so that the baggage remains within view during the entire journey. If the ability to secure baggage in a compartment is provided, trips to the restroom or elsewhere in the vehicle become more convenient, since the baggage does not have to be removed to accompany the passenger.

Further, various embodiments provide a more systematic and convenient way to fairly divide a limited number of baggage compartment bins. This becomes useful when one considers that passengers often rush to board a vehicle in order to secure a compartment that is near their seats, or indeed, to secure any compartment whatsoever, since some passengers carry more than the allowed amount of baggage on to the vehicle (or the baggage they bring exceeds the allowable dimensions). Apportioning bins in accordance with reservations prevents these passengers from taking more space than is allotted to them. This feature alone can serve to make travel a more rewarding experience. Other advantages will become apparent as the various embodiments are now described in detail.

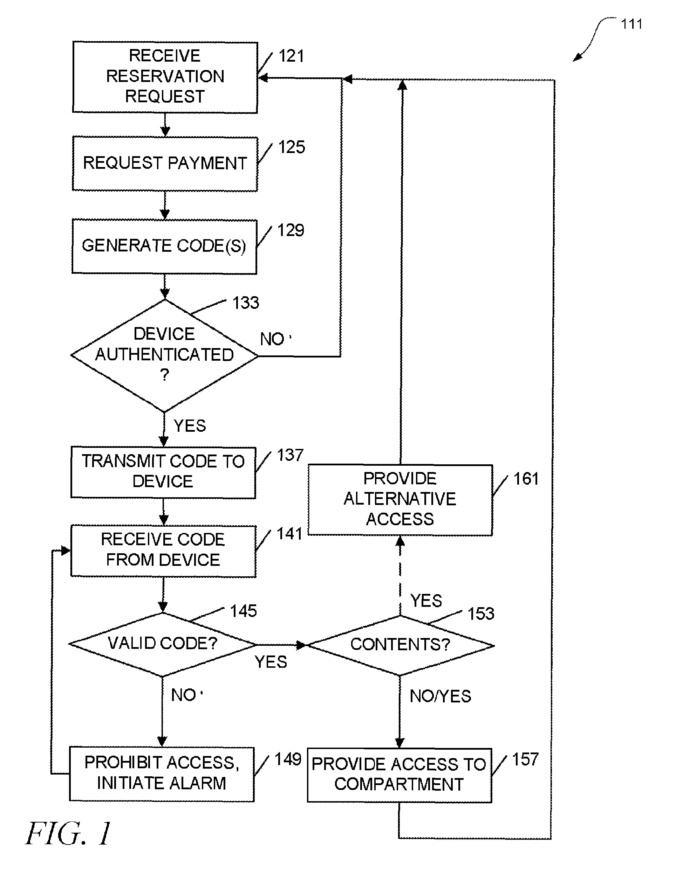

FIG. 1 is a flow diagram of methods 111 that can be used to manage access to lockable compartments, according to various embodiments of the invention. For the purposes of this document, it should be noted that a "vehicle" provided by a common carrier, such as an airline, a bus company, a train company, or a shipping (e.g., cruise line) company, can include a flying vehicle, a road-based vehicle, a track-based vehicle, or a water-based vehicle.

In some embodiments, a method 111 of managing access to lockable compartments may begin at block 121 with receiving a reservation request for a travel reservation associated with one or more common carriers. The reservation request may comprise a request provided by a terminal operated by a travel agent, or a computer operated by the person entering the request over the Internet, for example.

Once the request is received, the opportunity to receive an access control code may be offered. The offer may be presented gratis, or in exchange for some type of consideration. Thus, the method 111 may continue on to block 125 with requesting monetary or reward program (e.g., frequent flyer miles) credit payment in return for providing an opportunity to receive the access control code.

The access control code, when presented by the passenger using a mobile device in proximity to the lockable compartment, is used to provide access to the compartment. In some embodiments, only a single code is used, which is matched directly when presented at the compartment. In other embodiments, the access control code is provided to the vehicle, or a selected compartment within the vehicle, as well as to the passenger, comprising one or both members of a pair of public and private keys. Another code (e.g., a code corresponding to the access control code), is provided by the mobile device as encrypted information, which is then used to access the compartment.

Responsive to the act of receiving the reservation request at block 121, and perhaps after receiving payment at block 125, the method 111 may continue on to block 129 with generating an access control code to control access to a lockable compartment within a vehicle designated to provide transportation associated with the travel reservation.

The access code may be generated by a module in a server owned by the common carrier, a module coupled to the compartment within the vehicle, or within a reservation kiosk associated with the carrier, among others. Thus, the activity at block 129 may comprise generating the access control code by a code generation module communicatively coupled to one of the compartment or a kiosk associated with the common carrier.

At some point, the mobile device used to unlock the compartment may be authenticated with respect to the travel reservation. Thus, the method 111 may continue on to block 133 with authenticating the mobile device associated with the travel reservation to verify that the mobile device is permitted to receive the access control code. If the device fails authentication, the method 111 may return to block 121.

After generation, the access code may be transmitted to the mobile device. Thus, the method 111 may continue on to block 137 with transmitting the access control code to the mobile device.

The compartment can be locked or unlocked when the code, or a code corresponding to the code (e.g., encrypted information derived from use of a public key) is received from the mobile device. Thus, the method 111 may continue on to block 141 with receiving, from the mobile device, the access control code or a code corresponding to the access control code to control access to the compartment. The mobile device comprises one of a cellular telephone, a personal digital assistant, or a personal computer, among others.

If an invalid code is received, the compartment may operate to refuse access, and/or an alarm may be given. Thus, the method 111 may comprise receiving an invalid code to control access to the compartment, wherein the invalid code is not the access control code or a code corresponding to the access control code. If the code is invalid, as determined at block 145, the method 111 may continue on to block 149 with prohibiting access to the compartment and/or initiating an alarm signal. A limited number of additional attempts to present the proper code may be permitted, or not, depending on the implementation.

If the compartment has been previously accessed, and already has contents stored in it, and the current access control code has not been previously presented, as determined at block 153, some embodiments may operate to make additional or alternative compartments available. Thus, the method 111 may continue on to block 153 with sensing that the lockable compartment as a first compartment has contents, followed by providing access to a second lockable compartment in addition to, or as an alternative to the first compartment at block 161.

When no contents are detected in the compartment, the method 111 may include locking or opening the compartment in response to receiving the access control code (or a code corresponding to the access control code) at block 157.

Compartments can be shared by more than one traveler in some cases. Thus, even when contents are already present, as determined at block 153, the method 111 may continue on to block 157 with providing shared access to the compartment, to permit multiple mobile devices to access the compartment using the access code, or a code corresponding to the access code.

The methods described herein do not have to be executed in the order described, or in any particular order. Moreover, various activities described with respect to the methods identified herein can be executed in repetitive, serial, or parallel fashion. The individual activities of the methods shown in FIG. 1 can also be combined with each other and/or substituted, one for another, in various ways. Information, including parameters, commands, operands, and other data, can be sent and received in the form of one or more carrier waves. Thus, many other embodiments may be realized.

The methods of managing access to lockable compartments shown in FIG. 1 can be implemented in various devices, as well as in a computer-readable storage medium, where the methods are adapted to be executed by one or more processors. Further details of such embodiments will now be described.

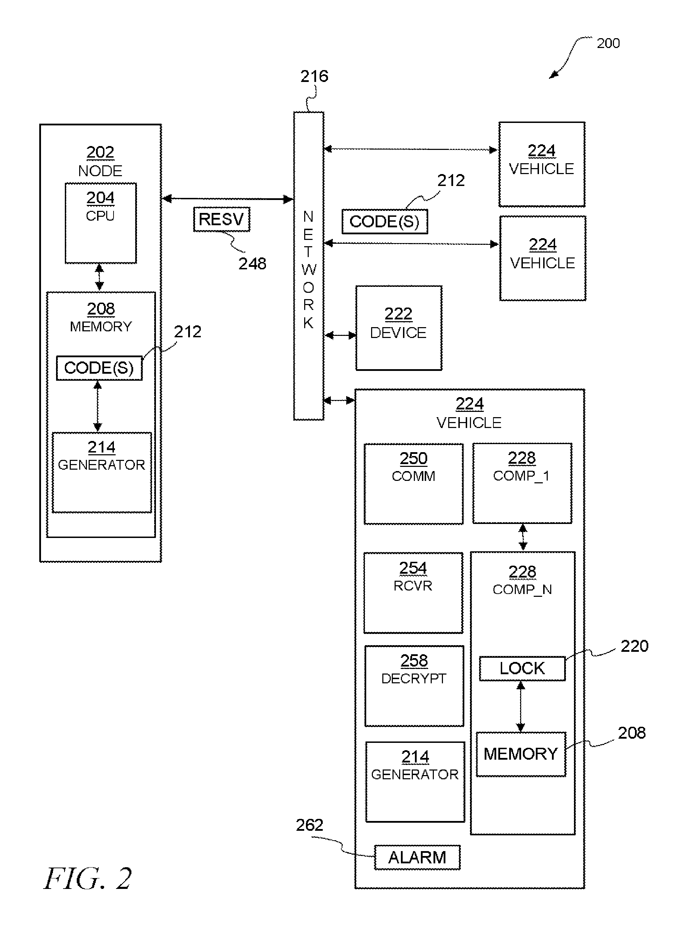

FIG 2. is a block diagram of an apparatus 200 that can be used to manage access to lockable compartments, according to various embodiments of the invention. Here it can be seen that the apparatus 200 may take many forms, perhaps comprising one or more processing nodes 202, one or more processors 204, multiple memories 208, multiple vehicles 224, and a mobile communications device 222. The apparatus 200 may comprise a client, a server, or some other networked processing node.

The processing nodes 202 may comprise physical machines or virtual machines, or a mixture of both. The nodes 202 may also comprise networked entities, such as servers and/or clients. In some basic implementations, the operations described can occur entirely within a single node 202. The apparatus 200 may thus comprise a single desktop computer or server, for example, or a number of networked nodes 202.

In some embodiments then, an apparatus 200 may comprise a vehicle 224 having a plurality of lockable compartments 228 (e.g., COMP_1 ... COMP_N). The lockable compartments 228 may each have a lock 220 to control access to the compartment 228. The apparatus 200 may further include a wireless receiver 254 and a memory 208 to store one or more access control codes to control operation of the lock 220 on a selected one of the compartments 228. Access to a selected compartment 228 (e.g., COMP_1) may be granted when one or more codes 212, such as the access control code or a code corresponding to the access control code, is received by the wireless receiver 254. In each case, the access control code and/or the code corresponding to the access control code is associated with a travel reservation on a common carrier.

The wireless receiver 254 can make use of various technologies. Thus, the wireless receiver 254 may comprise one of a radio receiver, a light receiver, or a sonic receiver.

The apparatus 200 may include a module to receive access control codes generated by a carrier-operated server. Thus, the apparatus 200 may comprise a communications module 250 to receive the access control code from a server (e.g., node 202) operated by the common carrier.

The apparatus 200 may include a decryption module 258, to accommodate the use of encrypted access codes, or key pairs. Thus, the apparatus 200 may comprise a decryption module 258 to decrypt the access control code (or the code corresponding to the access control code) after the access control code (or the code corresponding to the access control code) is received.

As noted previously, the access control code used by the compartment 228 may comprise one or more members of a public key/private key pair, and the code corresponding to the access control code may comprise information encrypted using the public key. Thus, the access control code may comprise a public and private key pair, and the code corresponding to the access control code may comprise encrypted information.

The apparatus 200 may include a code generation module 214 to generate access control codes. Thus, the apparatus 200 may comprise a code generation module 214 to generate the access control code, or the code corresponding to the access control code (e.g., code(s) 212).

The apparatus 200 may include one or more alarms 262. Thus, the apparatus 200 may comprise at least one of an audible or visible alarm to be activated upon receiving an invalid code that is not the access control code, or a code corresponding to the access control code.

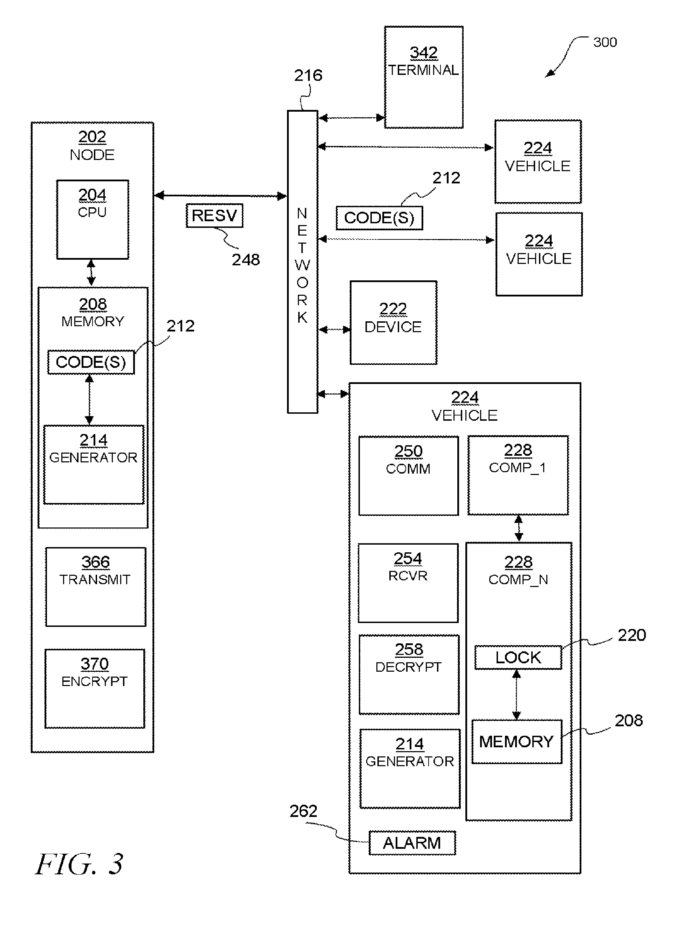

FIG. 3 is a block diagram of a system 300 that can be used to manage access to lockable compartments, according to various embodiments of the invention. The system 300 may comprise multiple instances of the apparatus 200 (shown in FIG. 2). The system 300 might also comprise a cluster of nodes 202, including physical and virtual nodes. It should be noted that any of the components in the nodes 202 may be included in the vehicles 224, in any combination. Similarly, any of the elements of the vehicles 224 (except for the compartments 228) can be included in the nodes 202, in any combination.

The nodes 202 may exist as a device embedded within another structure (e.g., as an embedded device), or as a regular desktop or laptop computer that includes a terminal 342 to show the activities conducted while the node 202 is active. Thus, the system 300 may also comprise a terminal 342 coupled to the nodes 202 to display visible indications of the activities conducted at the nodes 202.

In some embodiments, a system 300 comprises a server (e.g., taking the form of a node 202) to receive a reservation request 248 for a travel reservation associated with at least one common carrier. The system 300 may also comprise a code generation module 214 to generate an access control code associated with the reservation request 248. As noted previously, the access control code is used to enable access to a selected lockable compartment 228 (e.g., COMP_1) included in a vehicle 224 when a mobile communications device 222 transmits one or more codes 212 (e.g., the access control code or a code corresponding to the access control code) to a receiver 254 associated with the compartment.

The system 300 may include a terminal 342, such as a client terminal, to receive requests that result in placing reservations. Thus, the system 300 may comprise a client terminal to receive an end-user request, and to transmit at least a portion of the end-user request as part of the reservation request 248 to the server.

The system 300 may include a transmission module 366 to transmit the access control code, or other codes, to the passenger. Thus, the system 300 may comprise a transmission module 366 to transmit the access control code to the mobile communications device 222.

The system 300 may include an encryption module 370 to encrypt access control codes, or other codes. Thus, the system 300 may comprise an encryption module to encrypt the access control code.

The apparatus 200 and system 300 may be implemented in a machine-accessible and readable medium that is operational over one or more networks 216. The networks 216 may be wired, wireless, or a combination of wired and wireless. The apparatus 200 and system 300 can be used to implement, among other things, the processing associated with the methods 111 of FIG. 1. Modules may comprise hardware, software, and firmware, or any combination of these. Additional embodiments may be realized.

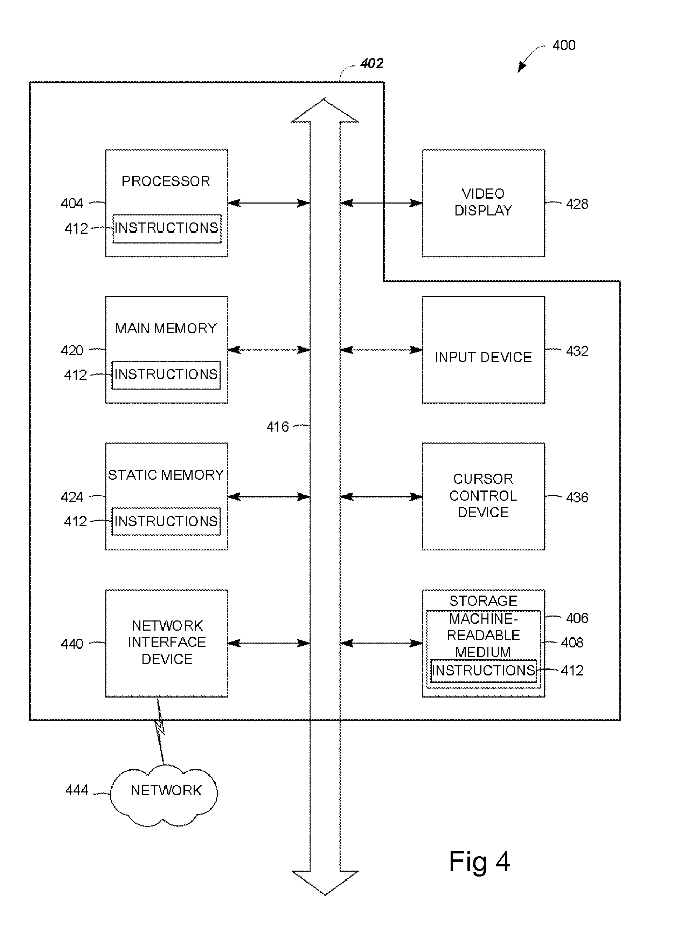

For example, FIG. 4 is a block diagram of an article 400 of manufacture, including a specific machine 402, according to various embodiments of the invention. Upon reading and comprehending the content of this disclosure, one of ordinary skill in the art will understand the manner in which a software program can be launched from a computer-readable medium in a computer-based system to execute the functions defined in the software program.

One of ordinary skill in the art will further understand the various programming languages that may be employed to create one or more software programs designed to implement and perform the methods disclosed herein. The programs may be structured in an object-orientated format using an object-oriented language such as Java or C++. Alternatively, the programs can be structured in a procedure-orientated format using a procedural language, such as assembly or C. The software components may communicate using any of a number of mechanisms well known to those of ordinary skill in the art, such as application program interfaces or interprocess communication techniques, including remote procedure calls. The teachings of various embodiments are not limited to any particular programming language or environment. Thus, other embodiments may be realized.

For example, an article 400 of manufacture, such as a computer, a memory system, a magnetic or optical disk, some other storage device, and/or any type of electronic device or system may include one or more processors 404 coupled to a machine-readable medium 408 such as a memory (e.g., removable storage media, as well as any memory including an electrical, optical, or electromagnetic conductor) having instructions 412 stored thereon (e.g., computer program instructions), which when executed by the one or more processors 404 result in the machine 402 performing any of the actions described with respect to the methods, apparatus, and systems disclosed above.

The machine 402 may take the form of a specific computer system having a processor 404 coupled to a number of components directly, and/or using a bus 416. Thus, the machine 402 may be similar to or identical to the apparatus 200 or system 300 shown in FIGs. 2 and 3, respectively.

Turning now to FIG. 4, it can be seen that components of the machine 402 may include main memory 420, static or non-volatile memory 424, and mass storage 406. Other components coupled to the processor 404 may include an input device 432, such as a keyboard, or a cursor control device 436, such as a mouse. An output device 428, such as a video display, may be located apart from the machine 402 (as shown), or made as an integral part of the machine 402.

A network interface device 440 to couple the processor 404 and other components to a network 444 may also be coupled to the bus 416. The instructions 412 may be transmitted or received over the network 444 via the network interface device 440 utilizing any one of a number of well-known transfer protocols (e.g., HyperText Transfer Protocol). Any of these elements coupled to the bus 416 may be absent, present singly, or present in plural numbers, depending on the specific embodiment to be realized.

The processor 404, the memories 420, 424, and the storage device 406 may each include instructions 412 which, when executed, cause the machine 402 to perform any one or more of the methods described herein. In some embodiments, the machine 402 operates as a standalone device or may be connected (e.g., networked) to other machines. In a networked environment, the machine 402 may operate in the capacity of a server or a client machine in server-client network environment, or as a peer machine in a peer-to-peer (or distributed) network environment.

The machine 402 may comprise a personal computer (PC), a tablet PC, a set-top box (STB), a personal digital assistant (PDA), a cellular telephone, a web appliance, a network router, switch or bridge, server, client, or any specific machine capable of executing a set of instructions (sequential or otherwise) that direct actions to be taken by that machine to implement the methods and functions described herein. Further, while only a single machine 402 is illustrated, the term "machine" shall also be taken to include any collection of machines that individually or jointly execute a set (or multiple sets) of instructions to perform any one or more of the methodologies discussed herein.

While the machine-readable medium 408 is shown as a single medium, the term "machine-readable medium" should be taken to include a single medium or multiple media (e.g., a centralized or distributed database), and/or associated caches and servers, and or a variety of storage media, such as the registers of the processor 404, memories 420, 424, and the storage device 406 that store the one or more sets of instructions 412. The term "machine-readable medium" shall also be taken to include any medium that is capable of storing, encoding or carrying a set of instructions for execution by the machine and that cause the machine 402 to perform any one or more of the methodologies of the present invention, or that is capable of storing, encoding or carrying data structures utilized by or associated with such a set of instructions. The terms "machine-readable medium" or "computer-readable medium" shall accordingly be taken to include tangible media, such as solid-state memories and optical and magnetic media.

Various embodiments may be implemented as a stand-alone application (e.g., without any network capabilities), a client-server application or a peer-to-peer (or distributed) application. Embodiments may also, for example, be deployed by Software-as-a-Service (SaaS), an Application Service Provider (ASP), or utility computing providers, in addition to being sold or licensed via traditional channels.

Implementing the apparatus, systems, and methods described herein may operate to provide new options for managing access to lockable compartments, such as baggage compartments in vehicles provided by common carriers. For example, security can now be provided for the luggage itself. Storing luggage may also be more convenient, since compartments closer to travelers may be selected in conjunction with reservations. Finally, baggage placement can be more systematically and efficiently managed, perhaps reducing conflicts. In sum, more efficient allocation of storage resources, with enhanced security and increased traveler satisfaction, may result.

The above embodiments are illustrative, and not restrictive. Many other embodiments will be apparent to those of ordinary skill in the art upon reviewing this disclosure. The scope of embodiments should therefore be determined with reference to the appended claims.

## Claims

1. A method, comprising:
receiving a reservation request (step 121) for a travel reservation associated with at least one common carrier; and
responsive to the receiving step, generating an access control code (step 129) to control access to a lockable compartment (228) within a vehicle (224) designated to provide transportation associated with the travel reservation.

2. The method of claim 1, further comprising:
receiving, from a mobile device, (step 141) the access control code or a code corresponding to the access control code to control access to the compartment (228), wherein the mobile device comprises one of a cellular telephone, a personal digital assistant, or a personal computer; and
locking or opening the compartment (step 149 or step 157) in response to the receiving step.

3. The method of claim 1 or 2, wherein the generating step further comprises:
generating the access control code by a code generation module (214) communicatively coupled to one of the compartment (228) or a kiosk associated with the common carrier.

4. The method of any preceding claim, further comprising:
receiving an invalid code to control access to the compartment (228), wherein the invalid code is not the access control code or a code corresponding to the access control code; and
at least one of prohibiting access to the compartment (228) (step 149) or initiating an alarm signal.

5. The method of any preceding claim, further comprising:
authenticating a mobile device associated with the travel reservation (step 133) to verify that the mobile device is permitted to receive the access control code.

6. The method of any preceding claim, further comprising:
transmitting the access control code to a mobile device (step 137).

7. The method of any preceding claim, further comprising:
sensing that the lockable compartment (228) as a first compartment has contents (step 153); and
providing access to a second lockable compartment in addition to, or as an alternative to the first compartment (step 161).

8. The method of any preceding claim, further comprising:
providing shared access to the compartment, to permit multiple mobile devices to access the compartment using the access control code, or a code corresponding to the access control code.

9. An apparatus comprising:
a vehicle (224) having a plurality of lockable compartments (228), the lockable compartments (228) each having a lock (220) to control access to the compartment (228);
a wireless receiver (254); and
a memory (208) to store an access control code to control operation of the lock (220) on a selected one of the compartments (228) when the access control code or a code corresponding to the access control code is received by the wireless receiver (254), the access control code and/or the code corresponding to the access control code associated with a travel reservation on a common carrier.

10. The apparatus of claim 9, further comprising:
a communications module (250) to receive the access control code from a server (202) operated by the common carrier.

11. The apparatus of claim 9 or 10, wherein the wireless receiver (254) comprises one of a radio receiver, a light receiver, or a sonic receiver.

12. The apparatus of any of claims 9 to 11, further comprising:
a decryption module (258) to decrypt the access control code or the code corresponding to the access control code after the access control code or the code corresponding to the access control code is received.

13. The apparatus of claim 12, wherein the access control code comprises a public and private key pair, and wherein a code corresponding to the access control code comprises encrypted information.

14. The apparatus of any of claims 9 to 13, further comprising:
a code generation module (214) to generate the access control code, or the code corresponding to the access control code.

15. The apparatus of any of claims 9 to 14, further comprising:
at least one of an audible or visible alarm to be activated upon receiving an invalid code that is not the access control code or the code corresponding to the access control code.
